# EUROPEAN PATENT SPECIFICATION

(11) **EP 3 549 801 B1**
(45) Date of publication and mention of the grant of the patent: **13.05.2020**
(21) Application number: 17875439.6
(22) Date of filing: 23.10.2017
(51) Int. Cl.: B60H 1/24, B60H 1/00, B60H 3/00, B60H 3/06, G01N 15/06

(54) **VEHICULAR AIR CONDITIONING DEVICE**
FAHRZEUGKLIMATISIERUNGSVORRICHTUNG
DISPOSITIF DE CLIMATISATION DE VÉHICULE

(30) Priority: 02.12.2016 JP 2016234915
(43) Date of publication of application: 09.10.2019
(73) Proprietor: Denso Corporation, Kariya-city Aichi 448-8661 (JP)
(72) Inventor: ISHIYAMA, Naotaka, Kariya-city, Aichi-pref., 448-8661 (JP)
(74) Representative: TBK
(86) International application number: PCT/JP2017/038168
(87) International publication number: WO 2018/100921

(56) References cited:
- WO-A1-2005/026712
- CN-A- 104 566 663
- JP-A- H05 221 231
- JP-A- S61 139 509
- JP-A- 2001 281 185
- JP-A- 2001 281 185
- JP-A- 2013 545 068
- KR-B1- 100 477 078
- US-A- 4 581 988
- US-A- 5 062 065
- US-A1- 2016 066 068
- US-B1- 6 283 849

## Description

### CROSS REFERENCE TO RELATED APPLICATIONS

This application is based on and claims the benefit of priority from Japanese Patent Application No. 2016-234915 filed on December 2, 2016.

### TECHNICAL FIELD

The present disclosure relates to a vehicular air conditioner.

### BACKGROUND

Conventionally, there is a particulate detector described in JP 2003-065940 A. The particulate detector described therein detects a particulate amount based on an output of a light receiving element and identifies the particulate as dust when a difference between a maximum value and an average value of the output of the light receiving element in a certain period is larger than a predetermined value. The particulate detector obtains a moving average of the number of times of dust identification per unit time over several unit times, and calculates a dust concentration based on the average number of times of dust identification.

Prior art document JP S61 139509 A describes a vehicular air conditioner (1) that air-conditions a vehicle interior by blowing air through an air conditioning duct (10) into the vehicle interior, the vehicular air conditioner (1) comprising a particulate sensor (70) that detects a particulate concentration in the air flowing through the air conditioning duct and a calculation section (80) that calculates an average value of the particulate concentration by averaging the particulate concentrations detected by the particulate sensor over a moving-average time period.

### SUMMARY OF INVENTION

In recent years, there is a need for knowing a particulate concentration in a vehicle interior, because the particulates such as Particulate Matters (PM) in the air affect health. The particulate concentration in the vehicle interior may change abruptly when a user opens or closes a window or a door of a vehicle, for example. In this situation, in the case of detecting the dust concentration based on the moving average of the numbers of times of dust identification per unit time as in the particulate detector described in Patent Literature 1, detected results are averaged and a calculation result of the particulate concentration does not change easily even when the current particulate concentration in the vehicle interior changes abruptly. In other words, a response of the calculation results of the particulate concentration to the actual change in particulate concentration may be delayed. Therefore, in the case where the calculation results of the particulate concentration is displayed on a display or the like, the calculation results of the particulate concentration displayed on the display may fall out of synchronization with the actual particulate concentration, which may bring a feeling of strangeness to the user.

The present disclosure has been made with the above-described circumstances in view and its object is to provide a vehicular air conditioner capable of detecting a particulate concentration that is closer to an actual particulate concentration in a situation.

A vehicular air conditioner of the present disclosure air-conditions a vehicle interior by blowing air through an air conditioning duct into the vehicle interior. The vehicular air conditioner includes a particulate sensor and a calculation section. The particulate sensor detects a particulate concentration in the air flowing through the air conditioning duct. The calculation section calculates an average value of the particulate concentration by averaging the particulate concentrations detected by the particulate sensor over a moving-average time period. When a current particulate concentration detected by the particulate sensor is higher than a predetermined threshold concentration, the calculation section makes the moving-average time period shorter than the moving-average time period used when the current particulate concentration is equal to or lower than the threshold concentration.

With this configuration, when the particulate concentration detected by the particulate sensor is equal to or higher than the threshold concentration, the moving-average time period used to calculate the average value of the particulate concentration becomes short. In this way, the current particulate concentration becomes likely to be reflected in the average value of the particulate concentration and therefore it is possible to detect the particulate concentration that is closer to an actual particulate concentration in the situation.

The reference signs in parentheses in the above-described means and the claims are examples showing correspondences with concrete means described in the embodiments described later.

According to the present disclosure, it is possible to provide a vehicular air conditioner capable of detecting the particulate concentration that is closer to the actual particulate concentration in the situation.

### BRIEF DESCRIPTION OF DRAWINGS

FIG. 1 is a block diagram showing a schematic configuration of a vehicular air conditioner in a first embodiment.
FIG. 2 is a graph showing an example of output characteristics of a particulate sensor in the first embodiment.
FIG. 3 is a flowchart showing a procedure of processing performed by an ECU in the first embodiment.
FIG. 4 is a flowchart showing a procedure of processing performed by an ECU in a second embodiment.
FIG. 5 is a flowchart showing a procedure of processing performed by an ECU in a third embodiment.
FIG. 6 is a flowchart showing a procedure of processing performed by an ECU in a fourth embodiment.
FIG. 7 is a flowchart showing a procedure of processing performed by an ECU in a fifth embodiment.
FIG. 8 is a flowchart showing a procedure of processing performed by an ECU in a sixth embodiment.
FIG. 9 is a graph showing a relationship between a value of a current particulate concentration and a moving-average time period in a vehicular air conditioner of another embodiment.

### DETAILED DESCRIPTION

The present embodiments will be described below with reference to the accompanying drawings. For easy understanding of the description, the same component elements in the respective drawings are provided with the same reference signs wherever possible and are not be described repeatedly.

### (First Embodiment)

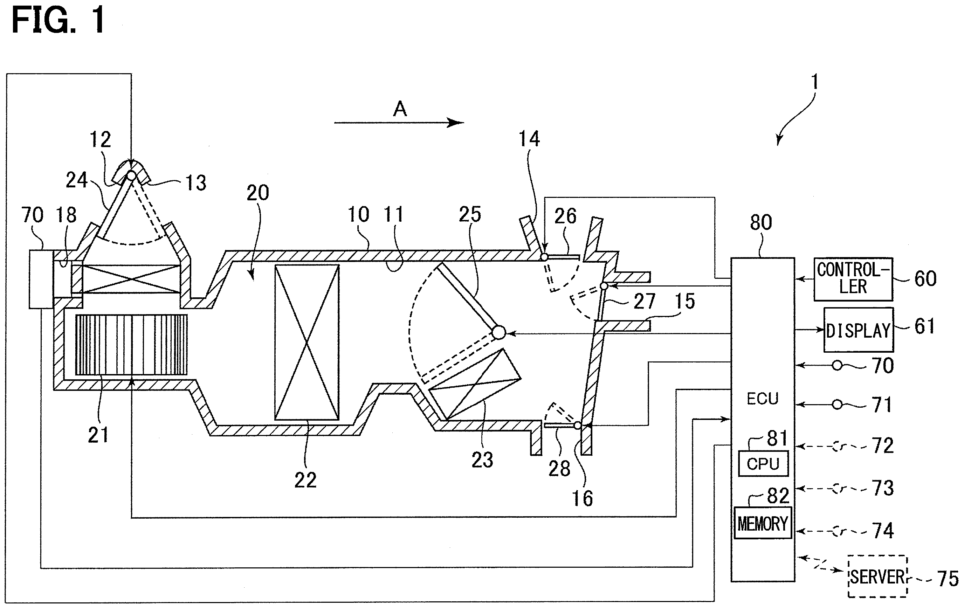

As shown in FIG. 1, a vehicular air conditioner 1 in the present embodiment includes an air conditioning duct 10 and an air conditioning unit 20. The vehicular air conditioner 1 is provided inside an instrument panel of a vehicle.

Inside the air conditioning duct 10, an air passage 11 that introduces conditioned air for air-conditioning a vehicle interior into the vehicle interior is formed. In the air passage 11, the air flows in a direction shown by an arrow A in FIG. 1. At a portion on an upstream side of the air conditioning duct 10 in the air flow direction A, an outside air suction port 12 and an inside air suction port 13 are formed as portions that take air into the air passage 11 from outside the air conditioning duct 10. The outside air suction port 12 is a portion for taking outside air which is air outside the vehicle interior into the air passage 11. The inside air suction port 13 is a portion for taking inside air which is air in the vehicle interior into the air passage 11.

At a portion in the air conditioning duct 10 on a downstream side of the outside air suction port 12 and the inside air suction port 13, a filter 17 is disposed. The filter 17 removes particulates such as dust included in the outside air taken in from the outside air suction port 12 or the inside air taken in from the inside air suction port 13.

At a portion of the air conditioning duct 10 on the downstream side in the air flow direction A, a defroster blow outlet 14, a face blow outlet 15, and a foot blow outlet 16 are formed. The defroster blow outlet 14 blows out the air flowing through the air conditioning duct 10 toward an inner face of a windshield of the vehicle. The face blow outlet 15 blows out the air flowing through the air conditioning duct 10 toward a driver or an occupant in a passenger's seat. The foot blow outlet 16 blows out the air flowing through the air conditioning duct 10 toward feet of the driver or the occupant in the passenger's seat.

The air conditioning unit 20 produces the conditioned air from the air introduced into the air passage 11 from the outside air suction port 12 or the inside air suction port 13. The conditioned air is air for air-conditioning the vehicle interior. The air conditioning unit 20 includes a blower fan 21, an evaporator 22, and a heater core 23.

The blower fan 21 is disposed on a downstream side of the outside air suction port 12 and the inside air suction port 13 in the air flow direction A. The blower fan 21 rotates in accordance with a supply of electric power to thereby generate an airflow in the air passage 11. By adjusting the electric power supplied to the blower fan 21, a volume of the air flowing through the air passage 11, i.e., a volume of the conditioned air is adjusted.

The evaporator 22 is disposed on a downstream side of the blower fan 21 in the air flow direction A. The evaporator 22 is a component element of a refrigeration cycle (not shown). The refrigeration cycle is formed by a compressor, a condenser, and an expansion valve in addition to the evaporator 22. In the refrigeration cycle, refrigerant circulates through the compressor, the condenser, the expansion valve, and the evaporator 22 in this order. In the evaporator 22, the refrigerant flowing inside exchanges heat with the air in the air passage 11 to thereby evaporate and vaporize. The evaporator 22 has a function of cooling the air flowing through the air passage 11 by utilizing heat of vaporization in vaporization of the refrigerant and a function of dehumidifying the air flowing through the air passage 11.

The heater core 23 is disposed on a downstream side of the evaporator 22 in the air flow direction A. The heater core 23 is connected to an engine (not shown) by a pipe. Engine cooling water circulates between the engine and the heater core 23 through the pipe. The heater core 23 heats the air flowing through the air passage 11 by utilizing the engine cooling water flowing inside the heater core 23 as a heat source.

The air conditioning unit 20 further includes an inside-outside air switching door 24, an air mix door 25, and blow outlet switching doors 26, 27, and 28.

The inside-outside air switching door 24 opens and closes the outside air suction port 12 and the inside air suction port 13. When the inside-outside air switching door 24 is in an inside air introducing position shown by solid lines in the figure, the outside air suction port 12 is closed and the inside air suction port 13 is open. In this case, the vehicular air conditioner 1 is in an inside air circulating mode in which the inside air is taken into the air passage 11 from the inside air suction port 13. When the inside-outside air switching door 24 is in an outside air introducing position shown by broken lines in the figure, the inside air suction port 13 is closed and the outside air suction port 12 is open. In this case, the vehicular air conditioner 1 is in an outside air introducing mode in which the outside air is taken into the air passage 11 from the outside air suction port 12.

The air mix door 25 adjusts a ratio between a volume of the air flowing into the heater core 23 and a volume of the air bypassing the heater core 23. To put it concretely, a position of the air mix door 25 can be adjusted between a maximum heating position shown by solid lines in the figure and a maximum cooling position shown by broken lines in the figure. When the air mix door 25 is in the maximum heating position, most of the air passing through the evaporator 22 passes through the heater core 23 and therefore a temperature of the conditioned air increases the most. When the air mix door 25 is in the maximum cooling position, most of the air passing through the evaporator 22 bypasses the heater core 23. In this case, the air cooled in the evaporator 22 flows to the respective blow outlets 14 to 16 as it is and therefore the temperature of the conditioned air decreases the most. In the vehicular air conditioner 1, by adjusting an opening of the air mix door 25 between the maximum heating position and the maximum cooling position, the temperature of the conditioned air is adjusted.

The blow outlet switching doors 26 to 28 switch between open and closed states of the defroster blow outlet 14, the face blow outlet 15, and the foot blow outlet 16, respectively. When at least one of the blow outlet switching doors 26 to 28 is brought into the open state, the conditioned air is blown out from the open blow outlet toward the vehicle interior.

Next, an electric configuration of the vehicular air conditioner 1 will be described. The vehicular air conditioner 1 includes a controller 60, a display 61, a particulate sensor 70, and an ECU (electronic control unit) 80. In the present embodiment, the ECU 80 corresponds to a calculation section.

The controller 60 is a unit operated by the driver to adjust a volume, a temperature, and the like of the conditioned air. The controller 60 is disposed on the instrument panel of the vehicle, for example. With the controller 60, it is possible to select one of the outside air introducing mode and the inside air circulating mode, for example. With the controller 60, it is also possible to set the volume of the conditioned air, the temperature of the conditioned air, the blow outlet of the conditioned air, and the like. The controller 60 outputs the pieces of control information to the ECU 80.

The display 61 is a unit that displays various kinds of information of the vehicular air conditioner 1. In the present embodiment, a display of a car navigation system of the vehicle is used as a substitute for the display 61 of the vehicular air conditioner 1. It is also possible to use a dedicated display 61 for the vehicular air conditioner 1.

The particulate sensor 70 is provided to a bypass path 18 formed at the portion of the air conditioning duct 10 where the filter 17 is formed. The bypass path 18 is a portion for causing the outside air taken in from the outside air suction port 12 or the inside air taken in from the inside air suction port 13 to flow while bypassing the filter 17. The particulate sensor 70 detects a concentration Cd of the particulates included in the air flowing through the bypass path 18.

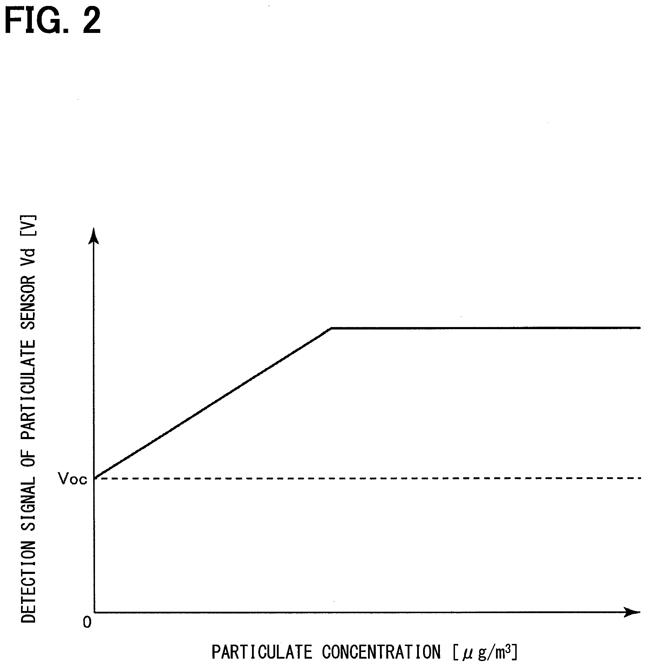

To put it concretely, the particulate sensor 70 includes a light emitting element that applies light to the bypass path 18 and a light receiving element that receives the light applied by the light emitting element, for example. The light receiving element outputs a voltage signal corresponding to the received light. The particulate sensor 70 outputs a voltage signal corresponding to the output voltage of the light receiving element as a detection signal Vd. An amount of light received by the light receiving element changes according to the particulate concentration Cd of the air passing through the bypass path 18. In other words, the detection signal Vd of the particulate sensor 70 changes according to the particulate concentration Cd of the air flowing through the air conditioning duct 10. The detection signal Vd of the particulate sensor 70 indicates a criterion voltage Voc when the particulate concentration is 0 [µg/m³] as shown in FIG. 2. The detection signal Vd of the particulate sensor 70 increases as the particulate concentration Cd increases and becomes a constant value when the particulate concentration Cd becomes equal to or higher than a predetermined concentration.

Detection signals of various sensors for detecting a condition of the vehicle and switches are taken into the ECU 80. For example, as shown in FIG. 1, an output signal of a starter switch 71 is taken into the ECU 80. The starter switch 71 is a switch operated by the driver to start the vehicle. As the starter switch 71, an ignition switch operated to start the engine of the vehicle and a push-button switch operated to start a hybrid car or an electric car, or the like can be used. When the driver turns on or off the starter switch 71, the starter switch 71 outputs a signal corresponding to the operation.

The ECU 80 is mainly formed by a microcomputer including a CPU 81, a memory 82, and the like. The ECU 80 acquires control information from the controller 60 and drives the air conditioning unit 20 based on the acquired control information. In this way, the conditioned air corresponding to the control information of the controller 60 is produced by the air conditioning unit 20.

The ECU 80 takes in the detection signal Vd of the particulate sensor 70. The ECU 80 acquires pieces of information about the particulate concentration Cd based on the detection signals Vd of the particulate sensor 70 and calculates an average value ACd of the particulate concentration by averaging the acquired particulate concentrations Cd over a moving-average time period. The ECU 80 displays the calculated average value ACd of the particulate concentration on the display 61.

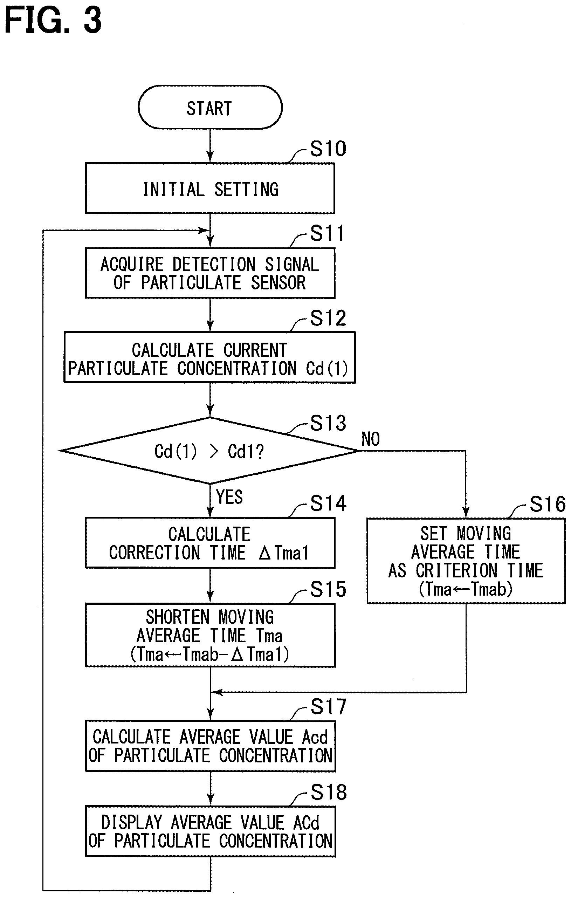

Next, a specific procedure of the calculation processing of the average value ACd of the particulate concentration performed by the ECU 80 is described with reference to FIG. 3. The ECU 80 performs the processing steps shown in FIG. 3 when the starter switch 71 is turned on.

As shown in FIG. 3, the ECU 80 first performs initial setting of the particulate sensor 70 as the processing in step S10. To put it concretely, the ECU 80 acquires the detection signal Vd of the particulate sensor 70 immediately after the starter switch 71 is turned on and stores the acquired detection signal Vd as an initial value Vdb of the detection signal Vd of the particulate sensor 70. The reason for this is as follows.

The initial value Vdb of the detection signal Vd of the particulate sensor 70 may change with time due to accumulation of the particulates on the light emitting element and the light receiving element. The initial value Vdb is a value of the detection signal Vd output from the particulate sensor 70 when air not including particulates is detected. Therefore, it is necessary to calculate the particulate concentration Cd in consideration of change of the initial value Vdb of the detection signal Vd of the particulate sensor 70 with time.

The ECU 80 in the present embodiment acquires the detection signal Vd output from the particulate sensor 70 immediately after the starter switch 71 is turned on. Air is not flowing through the bypass path 18 immediately after the starter switch 71 is turned on. Therefore, by acquiring the detection signal Vd of the particulate sensor 70 at this time, it is possible to acquire the detection signal Vd output from the particulate sensor 70 when the air not including the particulates is detected. The ECU 80 stores the acquired detection signal Vd in the memory 82 as the initial value Vdb.

The ECU 80 acquires the detection signal Vd of the particulate sensor 70 as the processing in step S11 following the processing in step S10 and calculates a current particulate concentration Cd(1) as the processing in step S12. To put it concretely, the ECU 80 calculates the current particulate concentration Cd(1) based on a difference value between the detection signal Vd of the particulate sensor 70 acquired in the processing in step S11 and the initial value Vdb stored in the memory 82.

Then, the ECU 80 determines whether the current particulate concentration Cd(1) is higher than a predetermined threshold concentration Cd1 as the processing in step S13. The threshold concentration Cd1 is obtained in advance by an experiment or the like and stored in the memory 82 for determination of whether a large number of particulates are included in the air. As the threshold concentration Cd1, a value defined by an air quality index may be used.

In a case of a negative determination in step S13, i.e., when the current particulate concentration Cd(1) is equal to or lower than the threshold concentration Cd1, the ECU 80 sets the moving-average time period Tma to a criterion time Tmab as the processing in step S16. The criterion time Tmab is set in advance and stored in the memory 82.

On the other hand, in a case of an affirmative determination in step S13, i.e., when the current particulate concentration Cd(1) is higher than the threshold concentration Cd1, the ECU 80 calculates a correction time ΔTma1 based on the current particulate concentration Cd(1) as the processing in step S14. The correction time ΔTma1 is a value for correcting the moving-average time period Tma used to calculate the average value ACd of the particulate concentration. As the correction time ΔTma1, a fixed value set in advance can be used, for example. As the correction time ΔTma1, a variable value that varies according to the current particulate concentration Cd(1) can be used as well. To put it concretely, the higher the current particulate concentration Cd(1) is, the larger value the ECU 80 may set as the correction time ΔTma1.

The ECU 80 shortens the moving-average time period Tma as the processing in step S15 following step S14. To put it concretely, the ECU 80 subtracts the correction time ΔTma1 from the criterion time Tmab and sets a subtracted value, "Tmab - ΔTma1" as the moving-average time period Tma.

After performing the processing in step S15 or the processing in step S16, the ECU 80 calculates the average value ACd of the particulate concentration as the processing in step S17. To put it concretely, the ECU 80 calculates the average value ACd of the particulate concentration by calculating the sum of the plurality of particulate concentrations Cd(1) to Cd(n) detected by the particulate sensor 70 for a period of the moving-average time period Tma before the present and dividing the sum by the number n of data. Here, "n" is an integer equal to or greater than 2. Therefore, when the moving-average time period Tma is shortened to "Tmab - ΔTma1" in step S15, the number n of data of the particulate concentration Cd used to calculate the average value ACd of the particulate concentration is smaller than when the moving-average time period Tma is set to the criterion time Tmab in step S16. As a result, the current particulate concentration Cd(1) becomes likely to be reflected in the average value ACd of the particulate concentration.

The ECU 80 displays the calculated average value ACd of the particulate concentration on the display 61 as the processing in step S18 following the processing in step S17 and then returns to the processing in step S11. Then, the ECU 80 repeatedly performs the processing steps in steps S11 to S17 at predetermined intervals.

Next, workings and effects of the vehicular air conditioner 1 in the present embodiment are described. When the particulate concentration Cd detected by the particulate sensor 70 changes to be equal to or higher than the threshold concentration Cd1, the moving-average time period Tma used to calculate the average value ACd of the particulate concentration becomes short. In this way, the current particulate concentration Cd(1) becomes likely to be reflected in the average value ACd of the particulate concentration and therefore it is possible to detect the particulate concentration that is closer to the actual particulate concentration in the situation. As a result, it is possible to display the more appropriate particulate concentration on the display 61 to thereby suppress a user's feeling of strangeness.

### (Second Embodiment)

Next, a second embodiment of the vehicular air conditioner 1 is described. Differences from the first embodiment are mainly described below.

As is shown by a broken line in FIG. 1, the vehicular air conditioner 1 in the present embodiment further includes a window opening-closing sensor 72 that detects an open-closed state of a window of a vehicle. The window opening-closing sensor 72 detects the open-closed state of the window of the vehicle and outputs a detection signal corresponding to the detected open-closed state of the window.

The output signal of the window opening-closing sensor 72 is taken into an ECU 80. The ECU 80 acquires information about the open-closed state of the window of the vehicle based on the output signal of the window opening-closing sensor 72.

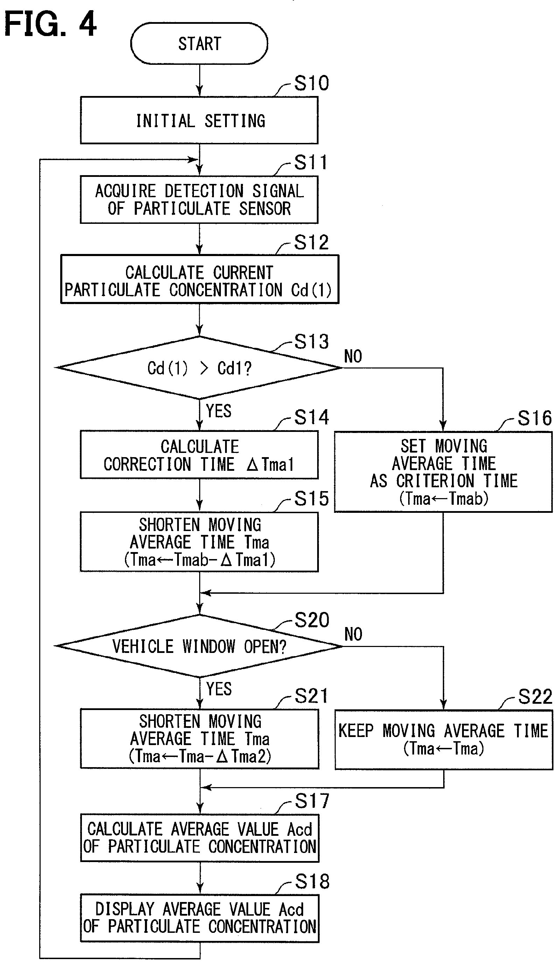

As shown in FIG. 4, after performing processing in step S15 or processing in step S16, the ECU 80 determines whether the window of the vehicle is open as processing in step S20. In the present embodiment, the processing in step S20 corresponds to processing for determining whether an operation that causes an increase in a particulate concentration in a vehicle interior is performed. In a case of a negative determination in step S20, i.e., when the window of the vehicle is closed, the ECU 80 maintains a moving-average time period Tma calculated in the processing in step S15 or the processing in step S16 as it is as processing in step S22.

In a case of an affirmative determination in step S20, i.e., when the window of the vehicle is open, the ECU 80 determines that the particulate concentration in the vehicle interior is likely to increase. In this case, the ECU 80 further shortens the moving-average time period Tma as processing in step S21. To put it concretely, the ECU 80 subtracts a correction time ΔTma2 from the moving-average time period Tma calculated in the processing in step S15 or the processing in step S16 to thereby further shorten the moving-average time period Tma. The value of the correction time ΔTma2 is set in advance by an experiment or the like and stored in a memory 82.

After performing the processing in step S21 or the processing in step S22, the ECU 80 performs processing steps in step S17 and a subsequent step.

Next, workings and effects of the vehicular air conditioner 1 in the present embodiment are described. For example, when an inside-outside air switching door 24 is set in an inside air introducing position, when a user opens the window of the vehicle, outside air enters the vehicle interior and therefore the particulate concentration in the vehicle interior increases. As a result, a particulate concentration in an air conditioning duct 10 increases as well. In the vehicular air conditioner 1 in the present embodiment, the moving-average time period Tma becomes even shorter in this situation. In this way, the current particulate concentration Cd(1) becomes further likely to be reflected in the average value ACd of the particulate concentration and therefore it is possible to detect the particulate concentration that is closer to an actual particulate concentration in the situation.

### (Third Embodiment)

Next, a third embodiment of the vehicular air conditioner 1 is described. Differences from the first embodiment are mainly described below.

As is shown by a broken line in FIG. 1, the vehicular air conditioner 1 in the present embodiment further includes a door opening-closing sensor 73 that detects an open-closed state of a door of a vehicle. The door opening-closing sensor 73 detects the open-closed state of the door of the vehicle and outputs a detection signal corresponding to the detected open-closed state of the door.

The output signal of the door opening-closing sensor 73 is taken into an ECU 80. The ECU 80 acquires information about the open-closed state of the door of the vehicle based on the output signal of the door opening-closing sensor 73.

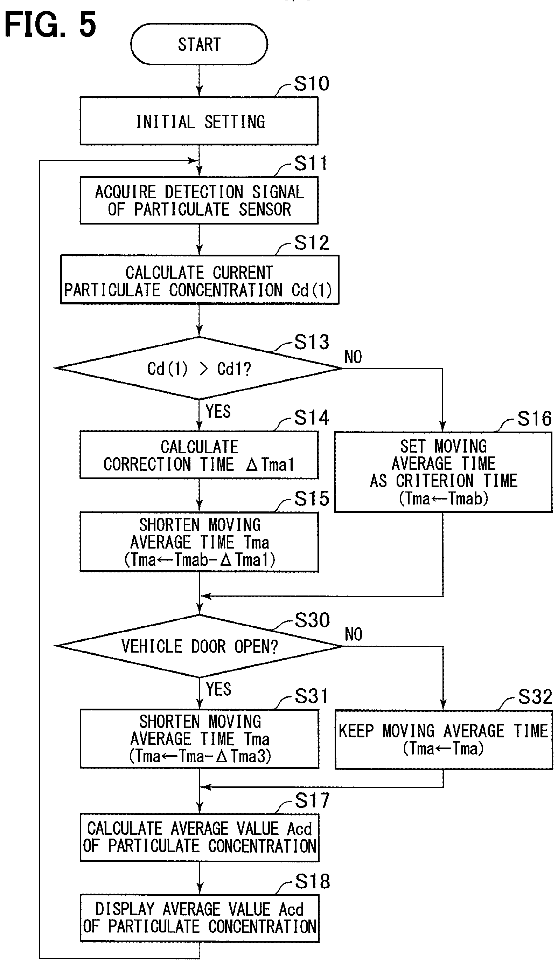

As shown in FIG. 5, after performing processing in step S15 or processing in step S16, the ECU 80 determines whether the door of the vehicle is open as processing in step S30. In the present embodiment, the processing in step S30 corresponds to processing for determining whether an operation that causes an increase in the particulate concentration in a vehicle interior is performed. In a case of a negative determination in step S30, i.e., when the door of the vehicle is closed, the ECU 80 maintains a moving-average time period Tma calculated in the processing in step S15 or the processing in step S16 as it is as processing in step S32.

In a case of an affirmative determination in step S30, i.e., when the door of the vehicle is open, the ECU 80 determines that the particulate concentration in the vehicle interior is likely to increase. In this case, the ECU 80 further shortens the moving-average time period Tma as processing in step S31. To put it concretely, the ECU 80 subtracts a correction time ΔTma3 from the moving-average time period Tma calculated in the processing in step S15 or the processing in step S16 to thereby further shorten the moving-average time period Tma. The value of the correction time ΔTma3 is set in advance by an experiment or the like and stored in a memory 82.

After performing the processing in step S31 or the processing in step S32, the ECU 80 performs processing steps in step S17 and a subsequent step.

Next, workings and effects of the vehicular air conditioner 1 in the present embodiment are described. For example, when an inside-outside air switching door 24 is set in an inside air introducing position, when a user opens the door of the vehicle, outside air enters the vehicle interior and therefore the particulate concentration in the vehicle interior increases. As a result, a particulate concentration in an air conditioning duct 10 increases as well. In the vehicular air conditioner 1 in the present embodiment, the moving-average time period Tma becomes even shorter in this situation. In this way, the current particulate concentration Cd(1) becomes further likely to be reflected in the average value ACd of the particulate concentration and therefore it is possible to detect the particulate concentration that is closer to an actual particulate concentration in the situation.

### (Fourth Embodiment)

Next, a fourth embodiment of the vehicular air conditioner 1 is described. Differences from the first embodiment are mainly described below.

As is shown by a broken line in FIG. 1, the vehicular air conditioner 1 in the present embodiment includes an occupant sensor 74 that detects whether an occupant is in a vehicle interior. The occupant sensor 74 detects presence or absence of the occupant in the vehicle interior and outputs a signal corresponding to the detection result. As the occupant sensor 74, a sitting sensor that detects whether the occupant is sitting in a seat of a vehicle, an infrared sensor that detects presence or absence of the occupant in the vehicle interior by using infrared radiation, or the like can be used.

The output signal of the occupant sensor 74 is taken into an ECU 80. The ECU 80 acquires information about presence or absence of the occupant in the vehicle interior based on the output signal of the occupant sensor 74.

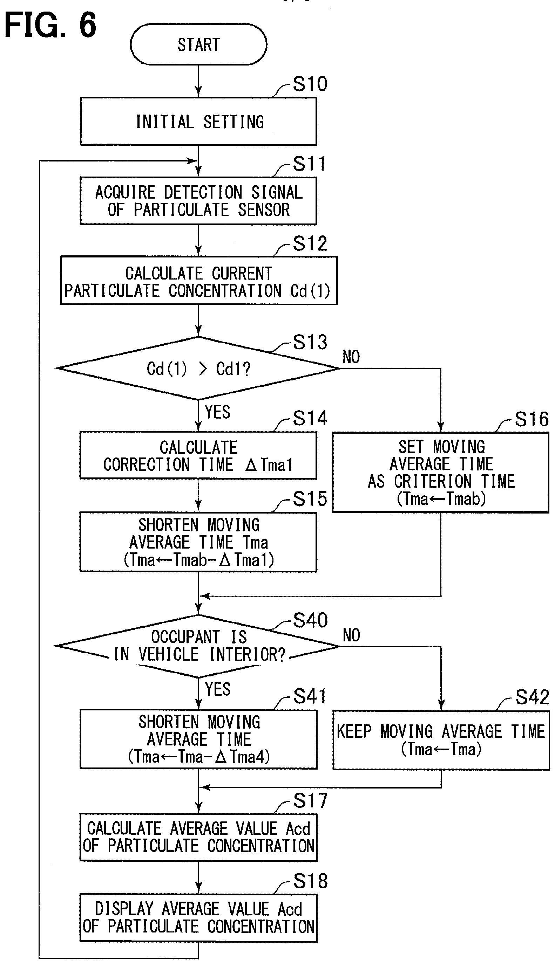

As shown in FIG. 6, after performing processing in step S15 or processing in step S16, the ECU 80 determines whether the occupant is in the vehicle interior as processing in step S40. In a case of a negative determination in step S40, i.e., when no occupant is in the vehicle interior, the ECU 80 maintains a moving-average time period Tma calculated in the processing in step S15 or the processing in step S16 as processing in step S42.

In a case of an affirmative determination in step S40, i.e., when the occupant is in the vehicle interior, the ECU 80 determines that the particulate concentration in the vehicle interior is likely to increase. In this case, the ECU 80 further shortens the moving-average time period Tma as processing in step S41. To put it concretely, the ECU 80 subtracts a correction time ΔTma4 from the moving-average time period Tma calculated in the processing in step S15 or the processing in step S16 to thereby further shorten the moving-average time period Tma. The value of the correction time ΔTma4 is set in advance by an experiment or the like and stored in a memory 82. The value of the correction time ΔTma4 may be a value that is variable according to the number of occupants in the vehicle interior. To put it concretely, the ECU 80 may increase the value of the correction time ΔTma4 as the number of occupants in the vehicle interior increases.

After performing the processing in step S41 or the processing in step S42, the ECU 80 performs processing steps in step S17 and a subsequent step.

Next, workings and effects of the vehicular air conditioner 1 in the present embodiment are described. When the occupant is in the vehicle interior, the particulates adhering to clothes or the like of the occupant fly in the vehicle interior, which increases the particulate concentration in the vehicle interior. In this situation, when the inside-outside air switching door 24 is set in an inside air introducing position, a particulate concentration in an air conditioning duct 10 increases as well. In the vehicular air conditioner 1 in the present embodiment, the moving-average time period Tma becomes even shorter in this situation. In this way, the current particulate concentration Cd(1) becomes further likely to be reflected in the average value ACd of the particulate concentration and therefore it is possible to detect the particulate concentration that is closer to an actual particulate concentration in the situation.

### (Fifth Embodiment)

Next, a fifth embodiment of the vehicular air conditioner 1 is described. Differences from the first embodiment are mainly described below.

As is shown by a broken line in FIG. 1, an ECU 80 in the present embodiment is radio-communicably connected to a server 75 that manages information about particulate concentration Cda in the atmosphere via a network line. The ECU 80 can acquire the information about the current particulate concentration Cda in the atmosphere by way of communication with the server 75. In the present embodiment, the server 75 corresponds to an external device.

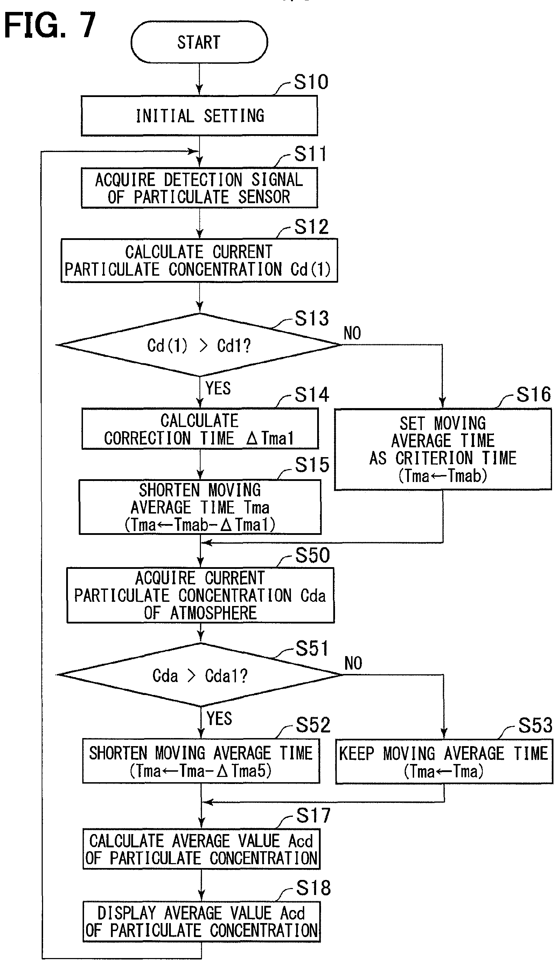

As shown in FIG. 7, after performing processing in step S15 or processing in step S16, the ECU 80 acquires the information about the current particulate concentration Cda in the atmosphere from the server 75 as processing in step S50. Then, the ECU 80 determines whether the current particulate concentration Cda in the atmosphere is higher than a predetermined threshold concentration Cda1 as processing in step S51. In the present embodiment, a threshold concentration Cd1 corresponds to a first threshold concentration and the threshold concentration Cda1 corresponds to a second threshold concentration.

In a case of a negative determination in step S51, i.e., when the current particulate concentration Cda in the atmosphere is equal to or lower than the predetermined threshold concentration Cda1, the ECU 80 maintains a moving-average time period Tma calculated in the processing in step S15 or the processing in step S16 as it is as processing in step S53.

In a case of an affirmative determination in step S51, i.e., when the current particulate concentration Cda in the air is higher than the threshold concentration Cda1, the ECU 80 further shortens the moving-average time period Tma as processing in step S52. To put it concretely, the ECU 80 subtracts a correction time ΔTma5 from the moving-average time period Tma calculated in the processing in step S15 or the processing in step S16 to thereby further shorten the moving-average time period Tma. The value of the correction time ΔTma5 is set in advance by an experiment or the like and stored in a memory 82. The value of the correction time ΔTma5 may be a value that is variable according to the particulate concentration Cda in the atmosphere. To put it concretely, the value of the correction time ΔTma5 may be increased as the particulate concentration Cda in the atmosphere increases.

After performing the processing in step S52 or the processing in step S53, the ECU 80 performs processing steps in step S17 and a subsequent step.

Next, workings and effects of the vehicular air conditioner 1 in the present embodiment are described. When the particulate concentration Cda in the atmosphere is high, particulates in the atmosphere are likely to enter an air conditioning duct 10 and therefore a particulate concentration in the air conditioning duct 10 may increase. In this situation, the moving-average time period Tma becomes even shorter. As a result, the current particulate concentration Cd(1) becomes further likely to be reflected in an average value ACd of the particulate concentration and therefore it is possible to detect the particulate concentration that is closer to an actual particulate concentration in the situation.

### (Sixth Embodiment)

Next, a sixth embodiment of the vehicular air conditioner 1 is described. Differences from the first embodiment are mainly described below.

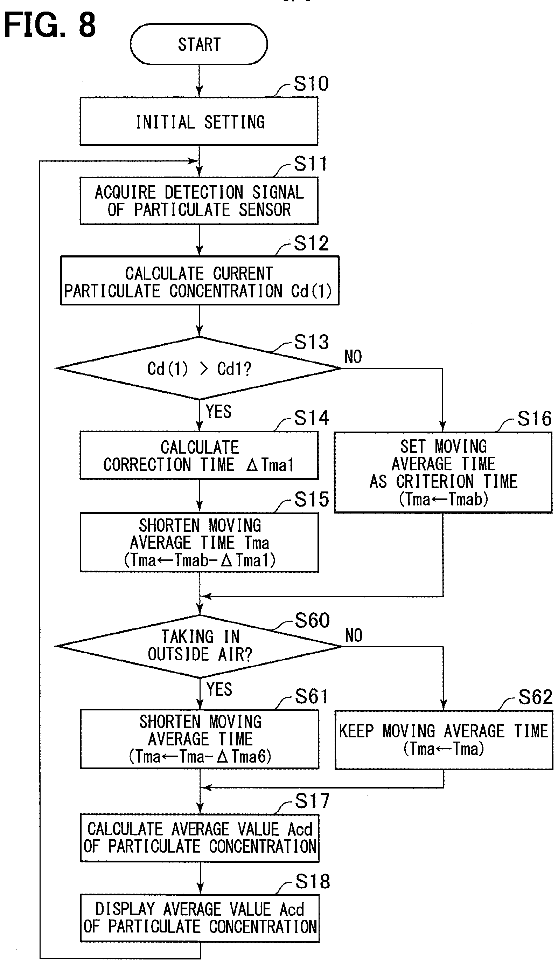

As shown in FIG. 8, after performing processing in step S15 or processing in step S16, the ECU 80 in the present embodiment determines whether outside air is introduced into an air conditioning duct 10 as processing in step S60. To put it concretely, the ECU 80 determines that the outside air is introduced into the air conditioning duct 10 based on a fact that an inside-outside air switching door 24 is in an outside air introducing position. In the present embodiment, the processing in step S60 corresponds to processing for determining whether an operation that causes an increase in a particulate concentration in a vehicle interior is performed. In a case of a negative determination in step S60, i.e., when the inside air is introduced into the air conditioning duct 10, the ECU 80 maintains a moving-average time period Tma calculated in the processing in step S15 or the processing in step S16 as it is as processing in step S62.

In a case of an affirmative determination in step S60, i.e., when the outside air is introduced into the air conditioning duct 10, the ECU 80 determines that the particulate concentration in the vehicle interior is likely to increase. In this case, the ECU 80 further shortens the moving-average time period Tma as processing in step S61. To put it concretely, the ECU 80 subtracts a correction time ΔTma6 from the moving-average time period Tma calculated in the processing in step S15 or the processing in step S16 to thereby further shorten the moving-average time period Tma. The value of the correction time ΔTma6 is set in advance by an experiment or the like and stored in a memory 82.

After performing the processing in step S61 or the processing in step S62, the ECU 80 performs processing steps in step S17 and a subsequent step.

Next, workings and effects of the vehicular air conditioner 1 in the present embodiment are described. For example, when the inside-outside air switching door 24 is set in the outside air introducing position, particulates in the atmosphere enter the air conditioning duct 10 and therefore a particulate concentration in the air conditioning duct 10 increases as well. In the vehicular air conditioner 1 in the present embodiment, the moving-average time period Tma becomes even shorter in this situation. In this way, the current particulate concentration Cd(1) becomes further likely to be reflected in the average value ACd of the particulate concentration and therefore it is possible to detect the particulate concentration that is closer to an actual particulate concentration in the situation.

### (Other Embodiments)

The respective embodiments may be carried out in the following modes.

In the vehicular air conditioner 1 in the fifth embodiment, an appropriate external device which is not the server 75 may be used as the external device for managing the information about the particulate concentration in the atmosphere.

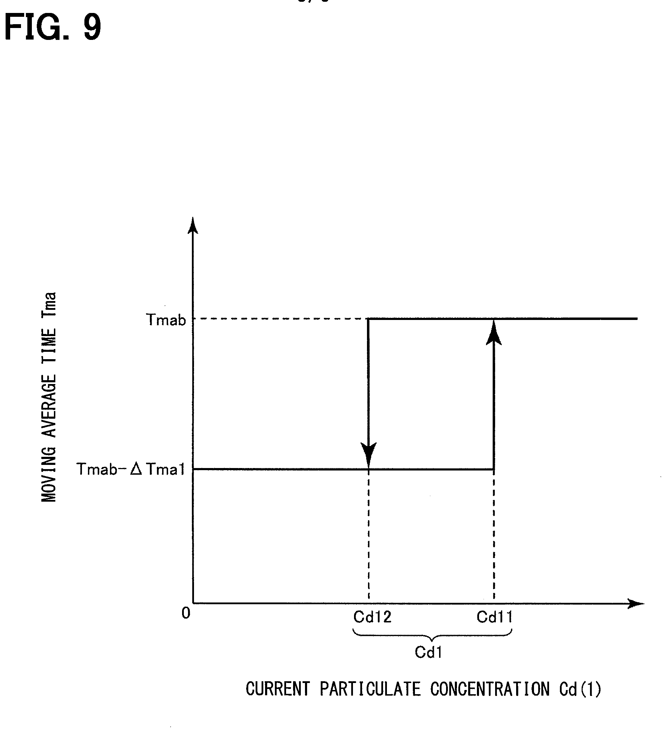

·As shown in FIG. 9, a threshold concentration Cd1 may have hysteresis with respect to a current particulate concentration Cd(1). To put it concretely, when the current particulate concentration Cd(1) increases, the threshold concentration Cd1 is set to a first set value Cd11. When the current particulate concentration Cd(1) decreases, the threshold concentration Cd1 is set to a second set value Cd12. With this configuration, it is possible to suppress variation in the threshold concentration Cd1 when the current particulate concentration Cd(1) varies around the set values Cd11, Cd12. As a result, it is possible to suppress variation in an average value ACd of the particulate concentration displayed on a display 61.

·Means and/or functions which the ECU 80 provides may be provided by a software stored in a tangible memory and a computer for running the software, a software only, a hardware only, or a combination of them. When the ECU 80 is provided by an electronic circuit which is a hardware, for example, the ECU 80 may be provided by a digital circuit or an analog circuit including a large number of logic circuits.

The present embodiments have been described above with reference to concrete examples. However, the present disclosure is not limited to the concrete examples. The concrete examples modified in design by a person skilled in the art where necessary are included in the scope of the appended claims. Respective elements in the above-described respective concrete examples and arrangements, conditions, shapes, and the like of the elements are not limited to those shown in the examples and can be changed where necessary.

## Claims

1. A vehicular air conditioner (1) that air-conditions a vehicle interior by blowing air through an air conditioning duct (10) into the vehicle interior, the vehicular air conditioner (1) comprising:
a particulate sensor (70) that detects a particulate concentration in the air flowing through the air conditioning duct; and
a calculation section (80) that calculates an average value of the particulate concentration by averaging the particulate concentrations detected by the particulate sensor over a moving-average time period, wherein
when a current particulate concentration detected by the particulate sensor is higher than a predetermined threshold concentration, the calculation section makes the moving-average time period shorter than the moving-average time period used when the current particulate concentration is equal to or lower than the threshold concentration.

2. The vehicular air conditioner according to claim 1, wherein,
when the current particulate concentration is higher than the threshold concentration, the calculation section determines whether an operation that causes an increase in the particulate concentration in the vehicle interior is performed for a vehicle, and
the calculation section makes the moving-average time period even shorter when the operation that causes an increase in the particulate concentration in the vehicle interior is determined to be performed for the vehicle.

3. The vehicular air conditioner according to claim 2 further comprising a door opening-closing sensor (73) that detects an open-closed state of a vehicle door, wherein
the calculation section determines that the operation that causes an increase in the particulate concentration in the vehicle interior is performed for the vehicle when the vehicle door is determined to be open based on the open-closed state of the vehicle door detected by the door opening-closing sensor.

4. The vehicular air conditioner according to claim 2 further comprising a window opening-closing sensor (72) that detects an open-closed state of a vehicle window, wherein
the calculation section determines that the operation that causes an increase in the particulate concentration in the vehicle interior is performed for the vehicle when the window is determined to be open based on the open-closed state of the window detected by the window opening-closing sensor.

5. The vehicular air conditioner according to claim 2, wherein the calculation section determines that the operation that causes an increase in the particulate concentration in the vehicle interior is performed for the vehicle when an inside-outside air switching door of the vehicular air conditioner is positioned in an outside air introducing position.

6. The vehicular air conditioner according to claim 1 further comprising an occupant sensor (74) that detects presence or absence of an occupant in the vehicle interior, wherein
when the current particulate concentration is higher than the threshold concentration, the calculation section determines whether the occupant is in the vehicle interior with the occupant sensor, and
the calculation section makes the moving-average time period even shorter when the occupant is determined to be in the vehicle interior.

7. The vehicular air conditioner according to claim 1, wherein
the threshold concentration is defined as a first threshold concentration, when the current particulate concentration is higher than the threshold concentration, the calculation section acquires information about a particulate concentration in atmosphere from an external device, and
the calculation section makes the moving-average time period even shorter when the particulate concentration in the atmosphere is higher than a predetermined second threshold concentration.

8. The vehicular air conditioner according to any one of claims 1 to 7, wherein the threshold concentration has hysteresis with respect to the current particulate concentration.

## Patentansprüche

1. Fahrzeugklimaanlage (1), die einen Fahrzeuginnenraum durch Einblasen von Luft durch einen Klimatisierungskanal (10) in den Fahrzeuginnenraum klimatisiert, mit:
einem Partikelsensor (70), der eine Partikelkonzentration in der durch den Klimatisierungskanal (10) strömenden Luft erfasst; und
einem Berechnungsabschnitt (80), der durch Durchschnittsbildung der von dem Partikelsensor über eine gleitende Durchschnittszeit erfassten Partikelkonzentrationen einen Durchschnittswert der Partikelkonzentration berechnet, wobei
wenn eine aktuelle von dem Partikelsensor erfasste Partikelkonzentration höher als eine vorbestimmte Schwellenwertkonzentration ist, der Berechnungsabschnitt die gleitende Durchschnittszeit kürzer als die gleitende Durchschnittszeit einstellt, die verwendet wird, wenn die aktuelle Partikelkonzentration gleich oder geringer als die Schwellenwertkonzentration ist.

2. Fahrzeugklimaanlage gemäß Anspruch 1, wobei
wenn die aktuelle Partikelkonzentration höher als die Schwellenwertkonzentration ist, der Berechnungsabschnitt bestimmt, ob eine Maßnahme, die eine Erhöhung der Partikelkonzentration in dem Fahrzeuginnenraum verursacht, für ein Fahrzeug durchgeführt wird, und
der Berechnungsabschnitt die gleitende Durchschnittszeit noch kürzer einstellt, wenn bestimmt wird, dass die Maßnahme, die eine Erhöhung der Partikelkonzentration in dem Fahrzeuginnenraum verursacht, für das Fahrzeug durchgeführt wird.

3. Fahrzeugklimaanlage gemäß Anspruch 2 ferner mit einem Tür-Öffnungs-Schließ-Sensor (73), der einen Öffnungs-/Schließzustand einer Fahrzeugtür erfasst, wobei
der Berechnungsabschnitt bestimmt, dass die Maßnahme, die eine Erhöhung der Partikelkonzentration in dem Fahrzeuginnenraum verursacht, für das Fahrzeug durchgeführt wird, wenn basierend auf dem von dem Tür-Öffnungs-Schließ-Sensor erfassten Öffnungs-/Schließzustand der Fahrzeugtür bestimmt wird, dass die Fahrzeugtür offen ist.

4. Fahrzeugklimaanlage gemäß Anspruch 2 ferner mit einem Fenster-Öffnungs-Schließ-Sensor (72), der einen Öffnungs-/Schließzustand eines Fahrzeugfensters erfasst, wobei
der Berechnungsabschnitt bestimmt, dass die Maßnahme, die eine Erhöhung der Partikelkonzentration in dem Fahrzeuginnenraum verursacht, für das Fahrzeug durchgeführt wird, wenn basierend auf dem von dem Fenster-Öffnungs-Schließ-Sensor erfassten Öffnungs-/Schließzustand des Fensters bestimmt wird, dass das Fahrzeugfenster offen ist.

5. Fahrzeugklimaanlage gemäß Anspruch 2, wobei der Berechnungsabschnitt bestimmt, dass die Maßnahme, die eine Erhöhung der Partikelkonzentration in dem Fahrzeuginnenraum verursacht, für das Fahrzeug durchgeführt wird, wenn eine Innen-Außen-Luftschalttür der Fahrzeugklimaanlage in einer Außenluft-Einführposition steht.

6. Fahrzeugklimaanlage gemäß Anspruch 1, ferner mit einem Insassensensor (74), der das Vorhandensein oder die Abwesenheit eines Insassen im Fahrzeuginnenraum erfasst, wobei
wenn die aktuelle Partikelkonzentration höher als die Schwellenwertkonzentration ist, der Berechnungsabschnitt mit dem Insassensensor bestimmt, ob sich ein Insasse in dem Fahrzeuginnenraum befindet, und
der Berechnungsabschnitt die gleitende Durchschnittszeit noch kürzer einstellt, wenn bestimmt wird, dass sich ein Insasse in dem Fahrzeuginnenraum befindet.

7. Fahrzeugklimaanlage gemäß Anspruch 1, wobei
die Schwellenwertkonzentration als eine erste Schwellenwertkonzentration definiert ist,
wenn die aktuelle Partikelkonzentration höher als die Schwellenwertkonzentration ist, der Berechnungsabschnitt von einem externen Gerät Informationen über eine Partikelkonzentration in der Atmosphäre ermittelt, und
der Berechnungsabschnitt die gleitende Durchschnittszeit noch kürzer einstellt, wenn die Partikelkonzentration in der Atmosphäre höher als eine vorbestimmte zweite Schwellenwertkonzentration ist.

8. Fahrzeugklimaanlage gemäß einem der Ansprüche 1 bis 7, wobei die Schwellenwertkonzentration eine Hysterese in Bezug auf die aktuelle Partikelkonzentration aufweist.

## Revendications

1. Climatiseur de véhicule (1) qui climatise un habitacle de véhicule en soufflant de l'air à travers un conduit de climatisation (10) à l'intérieur de l'habitacle de véhicule, le climatiseur de véhicule (1) comprenant :
un capteur de particules (70) qui détecte une concentration de particules dans l'air circulant à travers le conduit de climatisation ; et
une section de calcul (80) qui calcule une valeur moyenne de la concentration de particules, en faisant la moyenne des concentrations de particules détectées par le capteur de particules sur une période de temps moyenne mobile, dans lequel
lorsqu'une concentration de particules actuelle détectée par le capteur de particules est supérieure à une concentration seuil prédéterminée, la section de calcul rend la période de temps moyenne mobile plus courte que la période de temps moyenne mobile utilisée lorsque la concentration de particules actuelle est inférieure ou égale à la concentration seuil.

2. Climatiseur de véhicule selon la revendication 1, dans lequel,
lorsque la concentration de particules actuelle est supérieure à la concentration seuil, la section de calcul détermine si une opération qui entraîne une augmentation de la concentration de particules dans l'habitacle de véhicule est effectuée pour un véhicule, et
la section de calcul rend la période de temps moyenne mobile encore plus courte lorsque l'opération qui entraîne une augmentation de la concentration de particules dans l'habitacle de véhicule est déterminée comme étant effectuée pour le véhicule.

3. Climatiseur de véhicule selon la revendication 2 comprenant en outre un capteur d'ouverture-fermeture de porte (73) qui détecte un état ouvert-fermé d'une porte de véhicule, dans lequel
la section de calcul détermine que l'opération qui entraîne une augmentation de la concentration de particules dans l'habitacle de véhicule est effectuée pour le véhicule lorsque la porte de véhicule est déterminée comme étant ouverte, sur la base de l'état ouvert-fermé de la porte de véhicule détecté par le capteur d'ouverture-fermeture de porte.

4. Climatiseur de véhicule selon la revendication 2 comprenant en outre un capteur d'ouverture-fermeture de fenêtre (72) qui détecte un état ouvert-fermé d'une fenêtre de véhicule, dans lequel
la section de calcul détermine que l'opération qui entraîne une augmentation de la concentration de particules dans l'habitacle de véhicule est effectuée pour le véhicule lorsque la fenêtre est déterminée comme étant ouverte, sur la base de l'état ouvert-fermé de la fenêtre détecté par le capteur d'ouverture-fermeture de fenêtre.

5. Climatiseur de véhicule selon la revendication 2, dans lequel la section de calcul détermine que l'opération qui entraîne une augmentation de la concentration de particules dans l'habitacle de véhicule est effectuée pour le véhicule lorsqu'une porte de commutation d'air intérieur-extérieur du climatiseur de véhicule est positionnée dans une position d'introduction d'air extérieur.

6. Climatiseur de véhicule selon la revendication 1 comprenant en outre un capteur de présence d'occupant (74) qui détecte la présence ou l'absence d'un occupant dans l'habitacle de véhicule, dans lequel
lorsque la concentration de particules actuelle est supérieure à la concentration seuil, la section de calcul détermine si l'occupant se trouve dans l'habitacle de véhicule à l'aide du capteur de présence d'occupant, et
la section de calcul rend la période de temps moyenne mobile encore plus courte lorsque l'occupant est déterminé comme se trouvant dans l'habitacle de véhicule.

7. Climatiseur de véhicule selon la revendication 1, dans lequel
la concentration seuil est définie comme une première concentration seuil,
lorsque la concentration de particules actuelle est supérieure à la concentration seuil, la section de calcul acquiert des informations sur une concentration de particules dans l'atmosphère à partir d'un dispositif externe, et
la section de calcul rend la période de temps moyenne mobile encore plus courte lorsque la concentration de particules dans l'atmosphère est supérieure à une seconde concentration seuil prédéterminée.

8. Climatiseur de véhicule selon l'une quelconque des revendications 1 à 7, dans lequel
la concentration seuil présente une hystérésis par rapport à la concentration de particules actuelle.
